# EUROPEAN PATENT SPECIFICATION

(11) **EP 4 001 794 B1**
(45) Date of publication and mention of the grant of the patent: **17.01.2024**
(21) Application number: 21192035.0
(22) Date of filing: 19.08.2021
(51) Int. Cl.: F24F 13/20, F16L 25/00, F16L 37/00, F16B 5/06, F24F 8/80, F24F 13/28, F24F 8/108

(54) **AIR PURIFIER**
LUFTREINIGER
PURIFICATEUR D'AIR

(30) Priority: 23.11.2020 CN 202022736061 U
(43) Date of publication of application: 25.05.2022
(73) Proprietor: Zhejiang Shaoxing Supor Domestic Electrical Appliance Co., Ltd., Shaoxing, Zhejiang 312017 (CN)
(72) Inventor: CHAO, Fu, Shaoxing, Zhejiang 312017 (CN)
(74) Representative: LLR

(56) References cited:
- EP-A1- 2 908 067
- CN-U- 207 019 181
- JP-A- 2018 533 716

## Description

The present invention relates to the technical field of air treatment and in particular, to an air purifier.

An air purifier is an appliance capable of absorbing, decomposing, or transforming various types of air pollutants to effectively increase air purity. It is mainly used in indoor environments such as homes, offices, and stores.

An air purifier generally comprises a housing and a filter arranged in the housing. Air outside the housing enters into the housing and, after passing through the filter, is evacuated out of the housing, thereby achieving the purification of the air. The housing comprises a first housing and a second housing connected with each other by means of a thread and enclosing an accommodating cavity for receiving the filter. When the filter needs to be replaced, the threaded connection between the first housing and the second housing should be first disengaged, and then the filter can be replaced. Afterwards, the first housing and the second housing are re-connected with each other by means of the thread, completing the replacement of the filter.

However, with the above-described air purifier, replacing the filter is complicated and burdensome, making filter replacement time consuming and laborious. Some solutions have been proposed to solve the problem, for example EP 2908067 A1 which provides a coupling mechanism to secure a removable fan unit on top of a filter unit.

In view of the above-described problem, embodiments of the present invention provide an air purifier for which the filter can be replaced a simple and convenient way, making filter replacement less time consuming and laborious.

In order to achieve the above-described objective, the invention provides an air purifier according to claim 1.

In particular, the present invention provides an air purifier comprising: a housing, a purifying component, and a locking component, the housing comprising a first housing and a second housing detachably connected with each other and enclosing an accommodating cavity when connected, the purifying component being accommodated in the accommodating cavity. The locking component comprises a mounting box fixed on the first housing and a snap partially arranged in the mounting box and movable between an engaged position, where it engages with a groove provided on the second housing, and a disengaged position, where it disengages with the groove.

The first housing and the second housing are disconnected when the snap moves to the disengaged position, and connected when the snap moves to the engaged position and engages with the groove in a snap-fit manner.

Compared to the prior art, the air purifier provided by the present invention has the following advantages:
With the air purifier of the present invention, wherein, the first housing is provided with a mobile snap and the second housing is provided with a groove, the first housing and the second housing are disconnected when the snap moves away from the groove and disengages from the groove, and connected when the snap moves towards the groove and engages in a snap-fit manner with the groove. Thus, the connection or disconnection between the first housing and the second housing can be achieved by pressing the snap to make the snap move, which makes replacement of the purifying component simple, convenient, time-saving and effort-saving. The snap and the mounting box are assembled together, which facilitates the assembly and maintenance.

In some modes of realization, the snap comprises a base movably arranged in the mounting box and a tongue connected with the base and extending outside the mounting box to engage with the groove in a snap-fit manner at the engaged position.

With the air purifier of this embodiment of the invention, wherein the base is movably arranged in the mounting box, the base can move relative to the mounting box, so that the tongue connected with the base can move relative to the first housing, so as to realize the snap-fit engagement and disengagement between the tongue and the groove . Thus, the snap is movably arranged on the first housing.

In some modes of realization, the locking component further comprises a first elastic member provided in the mounting box. When the snap moves away from the groove, the snap drives the first elastic member to move to a compressed position. When the snap moves towards the groove, the first elastic member elastically returns to an initial position.

With the air purifier in this embodiment of the invention, wherein the first elastic member is provided in the mounting box, when the snap moves away from the groove, the snap compresses the first elastic member, enabling the snap and the groove to disengage from each other successfully and thus enabling the first housing and second housing to be disconnected, facilitating the replacement of the purifying component; and when the snap moves towards the groove, the first elastic member returns to position elastically, and the snap is maintained in a snap-fit engagement with the groove under the effect of the first elastic member, thus ensuring the connection between the first housing and the second housing so that the air purifier can normally operate.

In some modes of realization, the base is provided with a mounting cavity that opens towards a direction opposite to the groove, a part of the first elastic member is received in the mounting cavity.

With the air purifier of this embodiment of the invention, wherein a part of the first elastic member is received in the mounting cavity of the base, the first elastic member can be mounted, and with a distance retained between the base and the mounting box for relative movement. In some modes of realization, the mounting box is further provided with a guiding hole and the snap is further provided with a guiding pin protruding towards and inserted in the guiding hole, the guiding pin being inserted in the guiding hole.

With the air purifier of this embodiment of the invention, wherein the guiding pin is inserted in the guiding hole, the base can be guided when moving relative to the mounting box so that the tongue and the groove can reliably engage and disengage with each other.

In some modes of realization, the guiding pin is in the shape of a barrel with its open end located opposite to the guiding hole; a bottom wall and a side wall of the barrel of the guiding pin enclose the mounting cavity.

With the air purifier of this embodiment of the invention, wherein the open end of the barrel-shaped guiding pin is located opposite to the guiding hole, and the bottom wall and the side wall of the barrel of the guiding pin enclose the mounting cavity, the depth of the mounting cavity can be increased without increasing the thickness of the base and thus the first elastic member can be mounted reliably.

In some modes of realization, the mounting box is fixed to an inner side of the first housing and is further provided with an operating hole and the snap is further provided with an operating pin inserted in the operating hole.

With the air purifier of this embodiment of the invention, wherein the operating pin provided on the base is inserted in the operating hole, the snap connected with the operating pin can be moved by operating the operating pin and thus achieve the snap-fit engagement and disengagement between the snap and the groove. In addition, the control process is convenient and the control structure is simple.

In some modes of realization, the first housing is further provided with a mounting hole in which an operating member is inserted, one end of the operating member abutting against one end of the operating pin, another end of the operating member is flush with an outer surface of the first housing and is accessible from the outside of the first housing. In addition, the esthetical aspect of the housing is improved with the mounting box fixed to an inner side of the first housing.

With the air purifier of this embodiment of the invention, wherein the operating member is inserted in the mounting hole on the first housing, one end of the operating member abutting against one end of the operating pin, another end of the operating member is flush with an outer surface of the first housing, pressing the operating member can make the operating pin move away from the groove and thus disengage the snap and the groove. When the operating member is not pressed, the snap engages with the groove in a snap-fit manner under the effect of the first elastic member. Thus, the snap-fit engagement and disengagement between the snap and the groove is achieved by pressing, providing a simple and convenient operating process. In addition, the esthetical aspect of the housing is improved with one end of the operating member flush with the outer surface of the first housing.

In some modes of realization, the first housing is further provided with at least one set of guiding members located on the outer periphery of the mounting hole, each set of guiding members comprising two guiding sub-members; guiding ribs are provided on the outer peripheral surface of the operating member and are movable between two guiding sub-members of one set of guiding members.

With the air purifier of this embodiment of the invention, wherein the guiding ribs on the operating member are movably arranged between two guiding sub-members of one set of guiding members, when the operating member is pressed, it slides along the gap between two guiding sub-members. In other words, the operating member is guided when sliding. Thus, when the operating member is pressed, the operating member reliably abuts against and pushes the operating pin to move under the guiding of the guiding members. When the operating member is not pressed, it can return into the mounting hole, again under the guiding of the guiding members, so that the operating member works reliably.

According to the invention, the first housing is further provided with an ejecting part comprising an extendable ejecting member, when the snap disengages with the groove, the ejecting member extends out of the first housing and abuts against the purifying component mounted on the second housing so that the second housing and the first housing move away from each other, and when the snap and the groove are connected in a snap-fit manner, the ejecting member retracts back into the first housing.

With the air purifier of the invention, the ejecting member of the ejecting part extends out of the first housing and abuts against the purifying component mounted on the second housing after the snap and the groove disengage, so that the second housing and the first housing move away from each other and thus the snap and the groove are separated from each other, allowing the second housing and the first housing to be reliably disconnected. When snap and the groove engage in a snap-fit manner, the ejecting member retracts back into the first housing to avoid interfering with the connection between the first housing and the second housing, allowing the first housing and the second housing to be reliably connected.

In some modes of realization, the ejecting part further comprises a mounting member fixed on the first housing and a second elastic member provided between the mounting member and the ejecting member.

With the air purifier of this embodiment of the invention, wherein the first housing is provided with the mounting member and the second elastic member is provided between the mounting member and the ejecting member, after the snap and the groove disengage, the ejecting member extends out of the first housing under the effect of the second elastic member, so that the snap and the groove are separated from each other, and thus the first housing and the second housing are reliably disconnected. When the snap and the groove engage in a snap-fit manner, the ejecting member retracts into the first housing under the effect of the second housing and compresses the second elastic member without interfering with the connection between the first housing and the second housing, allowing the first housing and the second housing to be reliably connected. With the second elastic member and the mounting member, the ejecting member can extend out of and retract into the first housing and the structure is simple and reliable.

In some modes of realization, the ejecting member comprises a base plate and a first ejecting rod provided on one side of the base plate and capable of extending out of and retracting into the first housing, the second elastic member being provided between the base plate and the mounting member.

With the air purifier of this embodiment of the invention, wherein in the second elastic member is provided between the base plate and the mounting member, when the first housing and the second housing are connected, the first ejecting rod can retract into the first housing by pressing the second elastic member, without interfering with the connection between the first housing and the second housing. When the first housing and the second housing are disconnected, the first ejecting rod can extend out of the first housing under the effect of the second elastic member so that the snap and the groove are separated form each other and the first housing and the second housing are reliably disconnected.

In some modes of realization, the ejecting member further comprises a second ejecting rod provided on the other side of the base plate, a bypass hole being provided on the mounting member; when the first ejecting rod retracts into the first housing, the second ejecting rod extends into the bypass hole.

With the air purifier of this embodiment of the invention, wherein when the first ejecting rod of the ejecting member retracts into the first housing, the second ejecting rod of the ejecting member extends into the bypass hole on the mounting member, the ejecting member can reliably retract into the first housing after the snap and the groove engage in a snap-fit manner, and thus the first housing and the second housing can be reliably connected with each other.

In some modes of realization, the first housing is provided with a plurality of ejecting parts, the ejecting members of the plurality of ejecting parts being capable of extending out of and retracting into the first housing.

With the air purifier of this embodiment of the invention, wherein the first housing is provided with the plurality of ejecting parts, the first housing and the second housing can move away from each other after the snap and the groove disengage, thus the snap and the groove can be separated from each other, and the first housing and the second housing can be reliably disconnected.

In some modes of realization, one of the first housing and the second housing is further provided with a first snap-fit portion and the other of the first housing and the second housing is further provided with a second snap-fit portion, the first snap-fit portion and the second snap-fit portion being connected in a snap-fit manner when the first housing is connected with the second housing.

With the air purifier of this embodiment of the invention, wherein the first housing and the second housing are further connected in a snap-fit manner by means of the first snap-fit portion and the second snap-fit portion, snap-fit connection is established at two locations between the first housing and the second housing. Thus, the first housing and the second housing are reliably connected, and one of the snap-fit connections consists of the snap and the groove, making it convenient and fast to establish the snap-fit connection and disengage it.

In addition to the technical problem solved by embodiments of the present invention, the technical features constituting the technical solutions, and the beneficial effects brought by those technical features described above, other technical problems that can be solved by the air purifier provided by embodiments of the present invention, other technical features contained in the technical solutions, and the beneficial effects brought by those technical features will be described further in detail in the description of the embodiments of the present invention.

In order to more clearly describe the technical solutions of embodiments of the present invention or the prior art, the accompanying drawings to be used in describing the embodiments or the prior art are briefly described below. Obviously, the accompanying drawings described below are some embodiments of the present invention. To a person of ordinary skills in the art, other drawings can be obtained based on those accompanying drawings without involving an inventive step.
Figure 1a is a first exploded view of an air purifier of the present embodiment not part of the invention;
Figure 1b is a second exploded view of an air purifier of the present embodiment not part of the invention;
Figure 1c is a third exploded view of an air purifier of the present embodiment not part of the invention;
Figure 2a is a first sectional view of an air purifier of the present embodiment not part of the invention;
Figure 2b is a second sectional view of an air purifier of the present embodiment not part of the invention;
Figure 2c is a third sectional view of an air purifier of the present embodiment not part of the invention;
Figure 3a is a partial schematic view of a locking component of the present embodiment not part of the invention when mounted at the first housing;
Figure 3b is an exploded view of the locking component of the present embodiment not part of the invention;
Figure 3c is a sectional view of the locking component of the present embodiment not part of the invention;
Figure 3d is a partial sectional view of the air purifier of the present embodiment not part of the invention;
Figure 4a is a first schematic view of the structure of the air purifier of the present embodiment not part of the invention;
Figure 4b is a partial exploded view of the first housing and the operating member of the present embodiment not part of the invention;
Figure 4c is a partial sectional view at the assembly position of the first housing and the operating member of the present embodiment not part of the invention;
Figure 5a is a schematic view of the assembly of the first housing and the ejecting part of an embodiment of the invention;
Figure 5b is a partial sectional view at the assembly position of the first housing and the ejecting part of the present embodiment of the invention;
Figure 5c is a partial schematic view at the assembly position of the first housing and the ejecting part of the present embodiment of the invention;
Figure 5d is an exploded view of the first housing and the ejecting member of the present embodiment of the invention;
Figure 5e is an assembly view of the first housing and the ejecting member of the present embodiment of the invention;
Figure 5f is an assembly view of the first housing, the ejecting member, and the second elastic member of the present embodiment of the invention;
Figure 6a is a second schematic view of the structure of the air purifier of the present embodiment of the invention;
Figure 6b is a third schematic view of the structure of the air purifier of the present embodiment of the invention;
Figure 6c is a fourth schematic view of the structure of the air purifier of the present embodiment of the invention;
Figure 6d is a fifth schematic view of the structure of the air purifier of the present embodiment of the invention.

### Description of references:

| | | | |
|---|---|---|---|
| 100: | outer housing; | 101: | first housing; |
| 102: | second housing; | 103: | accommodating cavity |
| 104: | groove; | 105: | mounting hole; |
| 106: | operating member; | 107: | guiding member; |
| 108: | mounting member; | 109: | bypass hole; |
| 110: | hook; | 111: | protrusion; |
| 112: | guiding rib; | 113: | first hole; |
| 114: | guiding sub-member; | 200: | purifying component; |
| 300: | locking component; | 301: | snap; |
| 302: | mounting box; | 303: | base; |
| 304: | tongue; | 305: | first box body; |
| 306: | second box body; | 307: | slot; |
| 308: | through hole; | 309: | first elastic member; |
| 310: | guiding hole; | 311: | guiding pin; |
| 312: | mounting cavity; | 313: | operating hole; |
| 314: | operating pin; | 315: | bypass hole; |
| 400: | ejecting part; | 401: | ejecting member; |
| 402: | second elastic member; | 403: | base plate; |
| 404: | first ejecting rod; | 405: | second ejecting rod; |
| 500: | support; | 600: | seat. |

An air purifier generally comprises a housing and a filter arranged in the housing. The housing comprises a first housing and a second housing connected with each other by means of a thread. When the filter needs to be replaced, the threaded connection between the first housing and the second housing should be first disengaged and then the filter can be replaced. Afterwards, the first housing and the second housing are re-connected with each other by means of the thread.

However, with the above-described air purifier, when the filter needs to be replaced, the threaded connection between the first housing and the second housing should be disengaged first, and after replacing the filter, the first housing and the second housing need to be connected with each other again by means of the thread. This makes the process of replacing the filter complicated, burdensome, time consuming, and laborious. In view of this, the present invention provides an air purifier according to claim 1. In particular, it comprises a first housing and a second housing, a snap being movably arranged on the first housing, a groove being provided on the second housing. The first housing and the second housing are connected when the snap and the groove engage in a snap-fit manner with each other and disconnected after the snap and the groove disengage. The snap and the groove disengage when the filter needs to be replaced and engage with each other in a snap-fit manner after the filter is replaced. This makes the entire process of replacing the filter simple, convenient, time-saving and less laborious.

In order to make the above-described objectives, features, and advantages of embodiments of the present invention clearer and easier to understand, the technical solutions in embodiments of the present utility will be described clearly and completely in reference to the accompanying drawings of embodiments of the present invention. Obviously, the described embodiments are mere some of the embodiments, not all embodiments, of the present invention which is defined in the claims.

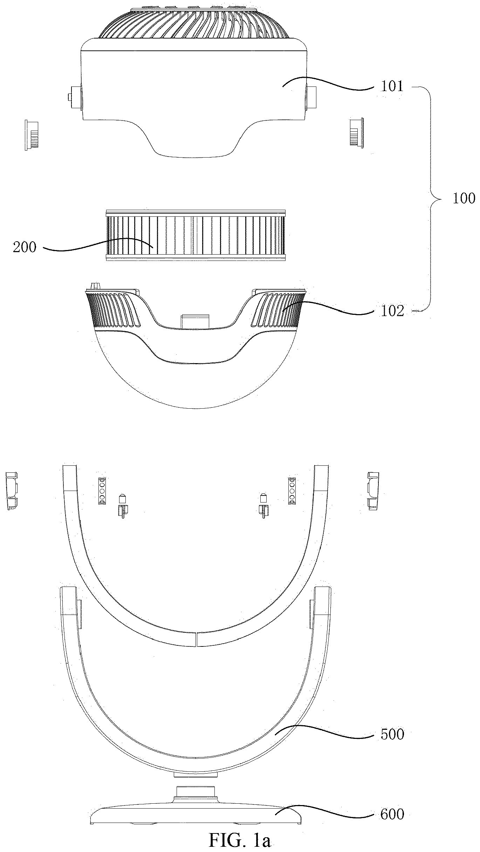

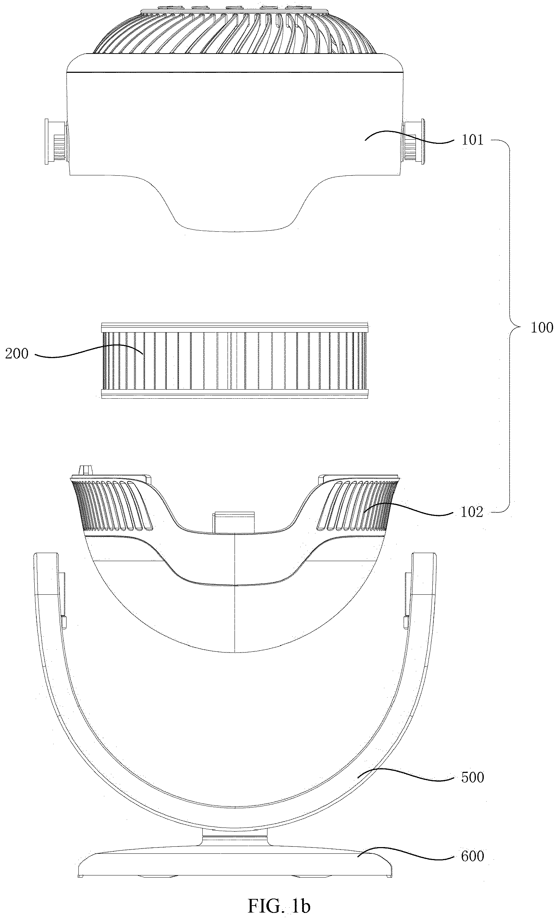

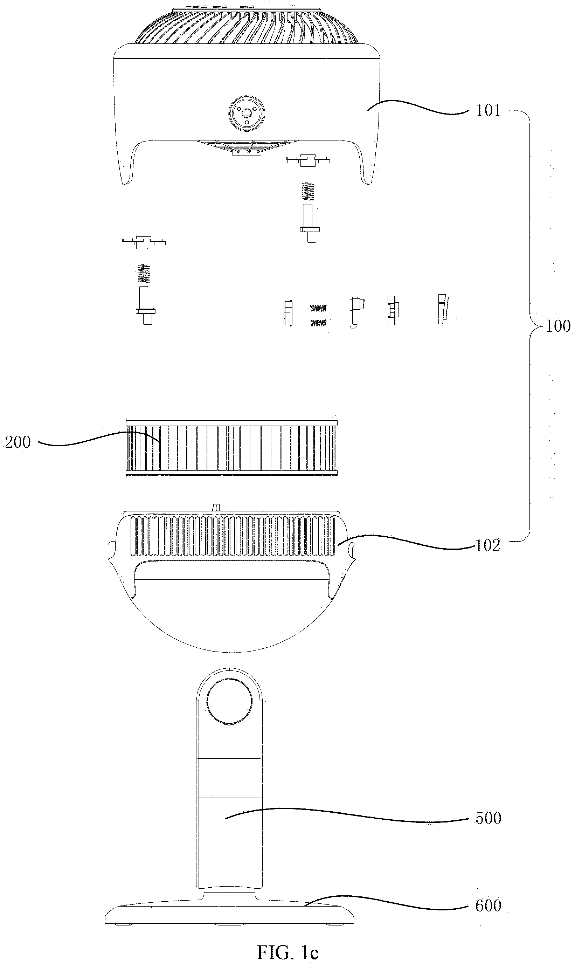

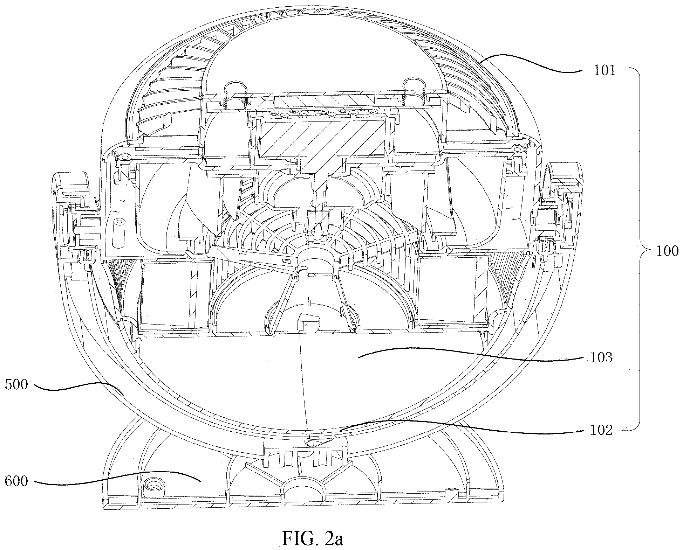

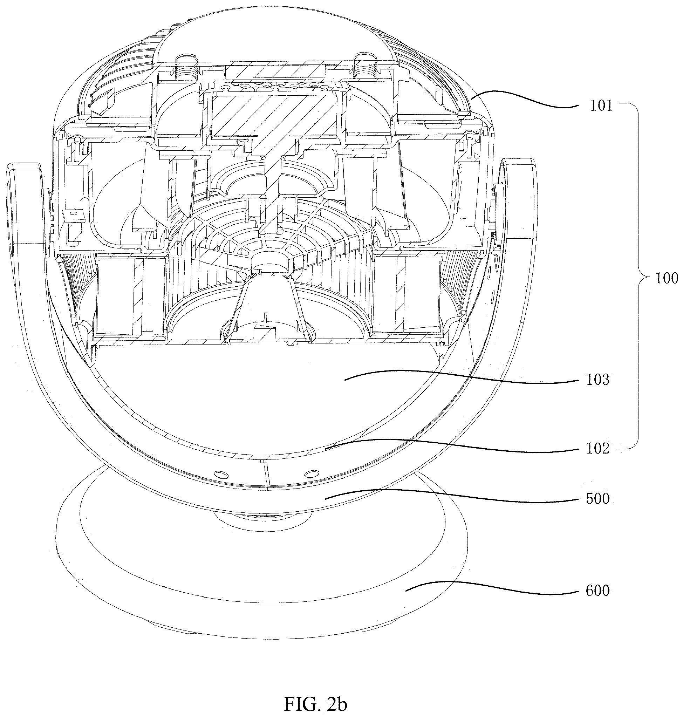

In reference to Figs. 1a to 1c and 2a to 2c, the present embodiment not part of the invention provides an air purifier comprising an outer housing 100 and a purifying component 200. The outer housing 100 comprises a first housing 101 and a second housing 102. The first housing 101 and the second housing 102 are detachably connected with each other and enclose an accommodating cavity 103 when connected. The purifying component 200 can be detachably provided on the first housing 101 or on the second housing 102 or sandwiched between the first housing 101 and the second housing 102, and is accommodated in the accommodating cavity 103. The purifying component 200 can be a filter. The following description takes a filter as an example. The filter can be provided on the second filter 102. Air outside the outer housing 100 entering the outer housing 100 flows through the filter and then leaves the outer housing 100. Impurities contained in the air flowing through the filter will be retained on the filter while the purified air will leave the filter and flow out of the outer housing 100. As such, the air is purified. After the filer has been in use for a period of time, the impurities on the filter will reduce the air purification results of the filter. Therefore, the filter should be replaced after a period of time, so as to ensure the air purification results of the air purifier. When the filter is replaced, the first housing 101 and the second housing 102 need to be disconnected so as to expose the filter in the accommodating cavity 103 and complete the filter replacement.

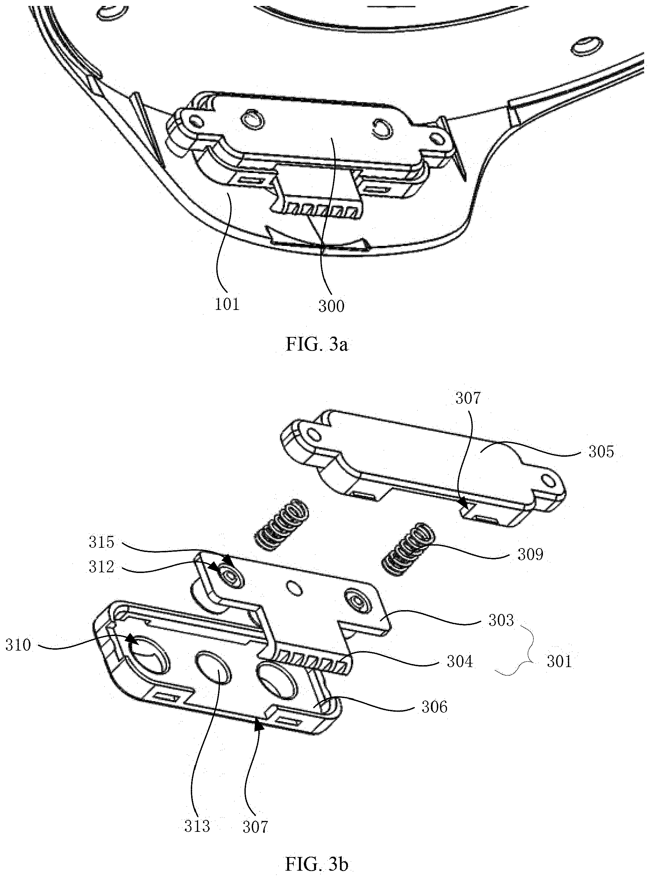

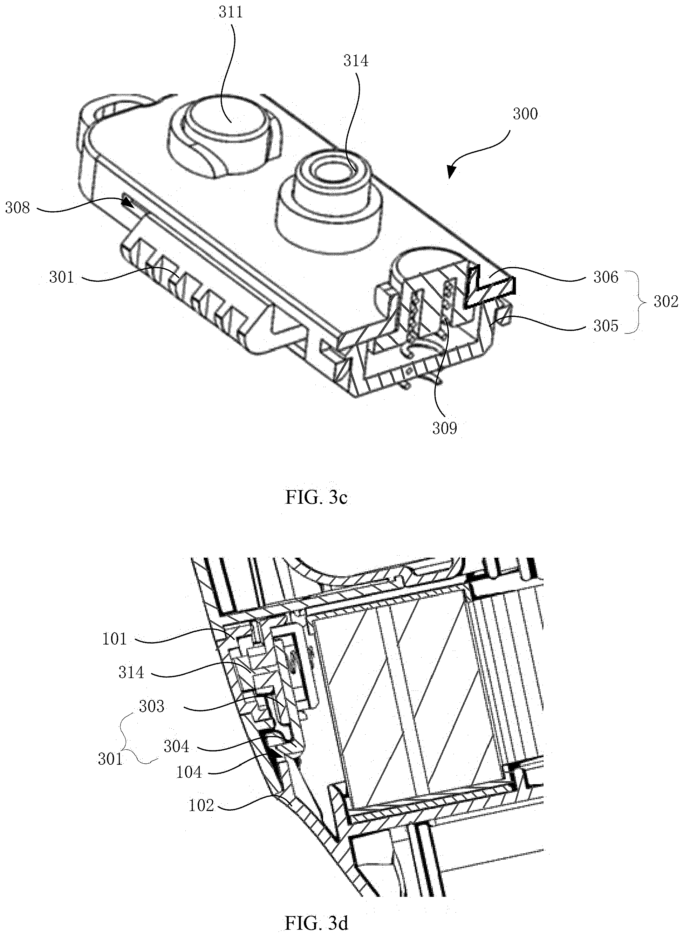

In reference to Figs. 3a to 3d, the air purifier of the present embodiment further comprises a locking component 300. The locking component 300 comprises a snap 301 that is movably arranged on one of the first housing 101 and the second housing 102. The snap 301 engages in a snap-fit manner with a groove 104 provided on the other one of the second housing 102 and the first housing. When the snap 301 moves away from the groove 104 and disengages from the groove 104, the first housing 101 and the second housing 102 are disconnected. When the snap 301 moves towards the groove 104 and engages with the groove 104 in a snap-fit manner, the first housing 101 and the second housing 102 are connected.

The description below of the air purifier of the present embodiment not part of the invention is made using an example wherein the snap 301 is movably arranged on the first housing 101 and the groove 104 is provided on the second housing 102.

In the air purifier of this embodiment not part of the invention, the first housing 101 is provided with the mobile snap 301 and the second housing 102 is provided with the groove 104, the first housing 101 and the second housing 102 are disconnected when the snap 301 moves away from the groove 104 and disengages from the groove 104, and connected when the snap 301 moves towards the groove 104 and engages with the groove 104 in a snap-fit manner. Thus, the connection or disconnection between the first housing 101 and the second housing 102 can be achieved by the movement of the snap 301, which makes the replacement of the purifying component 200 simple, convenient, time-saving and less laborious.

In reference to Figs. 3b and 3c, the locking component 300 further comprises a mounting box 302 fixed on the first housing 101. The snap 301 comprises a base 303 movably arranged in the mounting box 302 and a tongue 304 connected with the base 303 and extending outside the mounting box 302 to engage with the groove 104 in a snap-fit manner in the engaged position. The base 303 and the tongue 304 can be integrally formed. Movement of the base 303 relative to the mounting box 302 makes the tongue 304, which is connected with the base 303, to move relative to the groove 104, so that the tongue 304 and the groove 104 engage with each other in a snap-fit manner or disengage. The mounting box 302 can comprise a first box body 305 and a second box body 306 connected in a snap-fit manner or by a threaded connection and enclosing a cavity in which the base 303 is situated. The first box body 305 and the second box body 306 are further provided with a slot 307. The slot 307 on the first box body 305 and the slot 307 on the second box body 306 join together to form a through hole 308 from which the tongue 304 extends out.

In the air purifier of this present embodiment not part of the invention, the mounting box 302 is fixed on the first housing 101 and the base 303 is movably arranged in the mounting box 302. The movement of the base 303 relative to the mounting box 302 drives the tongue 304 connected with the base 304 to move relative to the first housing 101, so as to realize the snap-fit engagement and disengagement between the tongue 304 and the groove 104. In this way, the snap 301 is movably arranged on the first housing 101. Since the snap 301 and the mounting box 302 are assembled together, the assembling and the maintenance are facilitated.

In reference to Figs. 3b and 3c, the locking component 300 further comprises a first elastic member 309 provided in the mounting box 302. When the snap 301 moves away from the groove 104, the snap 301 drives the first elastic member 309 to move to a compressed position, storing energy. When the snap 301 moves towards the groove 104, the first elastic member 309 elastically returns to an initial position, releasing energy. The first elastic member 309 can be, for example, a spring. When the snap 301 does not compress the spring, the snap 301 and the groove 104 engage with each other in a snap-fit manner. When the snap 301 compresses the spring, the snap 301 and the groove 104 disengage.

The base 303 comprises a mounting cavity 312 that opens towards a direction opposite to the groove 104 and a part of the first elastic member 309 is received in the mounting cavity 312. When the first elastic member 309 is a compression spring, the bottom of the mounting cavity 312 can be further provided with a guiding rod and the compression spring is sleeved outside the guiding rod.

In the air purifier of this embodiment not part of the invention, the first elastic member 309 is provided in the mounting cavity 302. When the snap 301 moves away from the groove 104, it compresses the first elastic member 309 and can successfully disengage from the groove 104, thus disconnecting the first housing 101 and the second housing 102 and facilitating the replacement of the purifying component 200. When the snap 301 moves towards the groove 104, the first elastic member 309 is released and the snap 301 maintains engaged with the groove 104 under the effect of the first elastic member 309, thus connecting the first housing 101 and the second housing 102 and allowing the air purifier to operate normally. With a part of the first elastic member 309 received in the mounting cavity 312 of the base 303, the first elastic member 309 is mounted with a distance between the base 303 and the mounting box 302 retained for relative movement.

In reference to Figs. 3b and 3c, the mounting box 302 is further provided with a guiding hole 310 and the base 303 is further provided with a guiding pin 311 protruding towards the guiding hole 310, the guiding pin 311 being inserted in the guiding hole 310. The number of guiding holes 310 provided on the mounting box 302 can be two. Correspondingly, the number of guiding pins 311 provided on the base 303 is also two. Each guiding pin 311 is inserted in a corresponding guiding hole 310. With the guiding pin 311 inserted in the guiding hole 310, the base 303 can be guided when moving relative to the mounting box 302 so that the tongue 304 and the groove 104 reliably engage in a snap-fit manner and disengage with each other.

In reference to Figs. 3b and 3c, the base 303 is provided with a bypass hole 315. The guiding pin 311 is in the shape of a barrel. The bypass hole 315 constitutes the open end of the barrel of the guiding pin 311. In other words, the open end 315 of the guiding pin 311 is located on the opposite side of the guiding hole 310 and open towards the inside of the mounting box 302 and facing the inside of the first box body 305.. A bottom wall and a side wall of the barrel of the guiding pin 311 enclose the mounting cavity 312. The mounting cavity 312 can be a circular hole. The guiding pin 311 can be a circular cylinder. The axis of the guiding pin 311 is parallel to or coincides with the axis of the circular hole. With the open end of the barrel-shaped guiding pin 311 located on the surface of the base 303, and the bottom wall and the side wall of the barrel of the guiding pin 311 enclosing the mounting cavity 312, the depth of the mounting cavity 312 can be increased without increasing the thickness of the base 303 and thus the first elastic member 309 can be reliably mounted.

In reference to Figs. 3b and 3c, the mounting box 302 is further provided with an operating hole 313 and the base 303 is further provided with an operating pin 314 protruding towards the operating hole 313, the operating pin 314 being inserted in the operating hole 313. One end of the operating pin 314 is located inside the mounting box 302 and the other end of the operating pin 314 is located outside the mounting box 302. Pressing the other end of the operating pin 314 can cause the base 303 to compress the spring so that the tongue 304 moves away from the groove 104 and the first housing 101 and the second housing 102 are disconnected. The operating pin 314 can be a circular cylindrical rod or a prismatic rod, and the operating hole 313 can be a circular hole or a polygonal hole.

In the air purifier of this embodiment not part of the invention, the operating pin 314 provided on the base 303 is inserted in the operating hole 313, the operating pin 314 can be operated so as to move the base 303 connected with the operating pin 314 and thus achieve the snap-fit engagement and disengagement between the snap 301 and the groove 104. The control process is convenient and the control structure is simple.

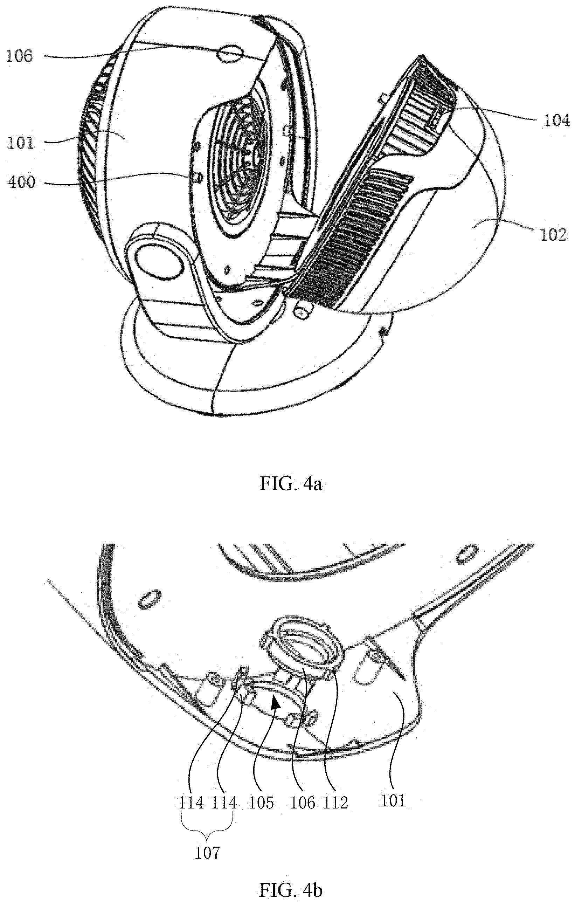

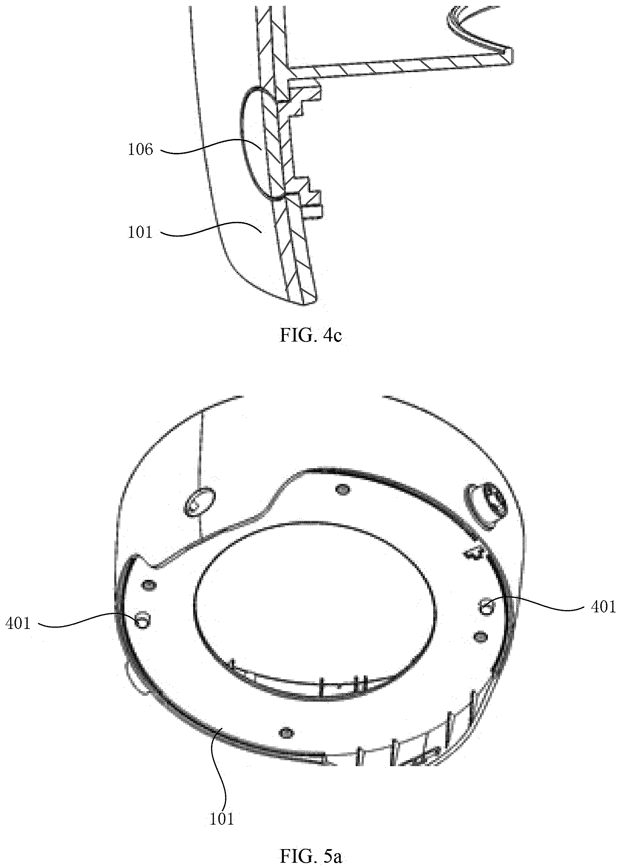

In reference to Figs. 4a, 4b, and 4c, the first housing 101 is further provided with a mounting hole 105 in which an operating member 106 is inserted. One end of the operating member 106 abuts against the end of the operating pin 314 extending out of the mounting box 302. Another end of the operating member 106 is flush with the outer surface of the first housing 101. When the operating member 106 is pressed, the operating member 106 drives the base 303 connected with the operating pin 106 by means of the operating pin 314 to compress the first elastic member 309, so that the tongue 304 connected with the base 303 moves away from the groove 104 and the tongue 304 and the groove 104 are disengaged. The first housing 101 and the second housing 102 are disconnected. When the operating member 106 is not pressed, the first elastic member 309 is restored from its deformation, pushing the base 303 to move towards the mounting hole 105 and thus making the operating pin 314 connected to the base 303 push the operating member 106 to restore its initial position. At the same time, the tongue 304 connected to the base 303 moves towards the groove 104, so that the tongue 304 and the groove 104 engage with each other in a snap-fit manner.

In the air purifier of this embodiment not part of the invention, the operating member 106 is inserted in the mounting hole 105 on the first housing 101, and one end of the operating member 106 abuts against the operating pin 314. Pressing the operating member 106 can drive the operating pin 314 to move away from the groove 104 and thus disengage the snap 301 and the groove 104. When the operating member 106 is not pressed, the snap 301 engages with the groove 104 in a snap-fit manner under the effect of the first elastic member 309. Thus, the snap-fit engagement and disengagement between the snap 301 and the groove 104 can be achieved by pressing, providing a simple and convenient operating process.

In reference to Fig. 4b, the first housing 101 is further provided with at least one set of guiding members 107 located outside the periphery of the mounting hole 105. Each set of guiding members 107 comprises two guiding sub-members 114. Guiding ribs 112 are provided on the outer surface of the operating member 106 and are capable of moving between two guiding sub-members 114 of a corresponding set of guiding members 107. The guiding sub-members 114 can be plate-shaped. The first housing 101 can be provided with a plurality of sets of guiding members 107. For example, the first housing 101 can be provided with three sets of guiding members 107, which are evenly distributed outside the periphery of the mounting hole 105.

In the air purifier of this embodiment not part of the invention, the guiding ribs 112 on the operating member 106 are capable of moving between two guiding sub-members 114 of a corresponding set of guiding members 107. When the operating member 106 is pressed, the operating member 106 slides along the gap between two guiding sub-members 114. In other words, the operating member 106 is guided in sliding. Thus, when the operating member 106 is pressed, the operating member 106 reliably abuts against and pushes the operating pin 314 to move under the guiding action of the guiding members 107. When the operating member 106 is not pressed, the operating member 106 can return into the mounting hole 105, again under the guiding action of the guiding members 107, so that the operating member 106 can reliably operate.

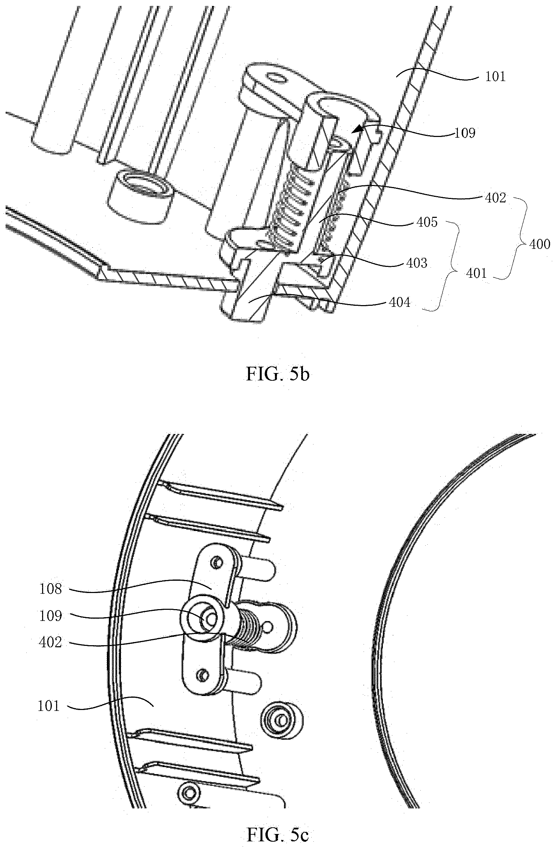

In reference to Figs. 5a and 5b, the first housing 101 is further provided with an ejecting part comprising an extendable ejecting member 401. When the snap 301 disengages with the groove 104, the ejecting member 401 extends out of the first housing 101 and abuts against the purifying component 200 mounted on the second housing 102 so that the second housing 102 and the first housing 101 move away from each other. When the snap 301 and the groove 104 are connected in a snap-fit manner, the ejecting member 401 retracts back into the first housing 101. The first housing 101 is provided with a first hole 113 through which the ejecting rod 401 extends out of the first housing 101 or retracts into the first housing 101.

In the air purifier of this embodiment of the invention, when the snap 301 and the groove 104 are disengaged, the ejecting member 401 of the ejecting part extends out of the first housing 101 and abuts against the purifying component 200 mounted on the second housing 102, so that the second housing 102 and the first housing 101 move away from each other and thus the snap 301 and the groove 104 are separated from each other, allowing the second housing 102 and the first housing 101 to be reliably disconnected. When the snap 301 and the groove 104 engage in a snap-fit manner, the ejecting member 401 of the ejecting part retracts back into the first housing 101, so as to avoid interfering with the connection between the first housing 101 and the second housing 102, allowing the first housing 101 and the second housing 102 to be reliably connected.

In reference to Fig. 5c, the ejecting part further comprises a mounting member 108 fixed on the first housing 101 and a second elastic member 402 provided between the mounting member 108 and the ejecting member 401. The second elastic member 402 can be a spring. When the snap 301 and the groove 104 engage with each other in a snap-fit manner, the first housing 101 and the second housing 102 are connected, and the purifying component 200 mounted on the second housing 102 presses on the end of the ejecting member 401 extending out of the first housing 101 so that the ejecting member 401 compresses the second elastic member 402 and retracts into the first housing 101. When the snap 301 and the groove 104 are disengaged, the first housing 101 and the second housing 102 are disconnected, so the second elastic member 402 is restored from its deformation. Thus, the ejecting member 401 extends out of the first housing 101 and abuts against and pushes the purifying component 200 mounted on the second housing 102 so as to push the first housing 101 to move away from the second housing 102.

In the air purifier of this embodiment of the invention, the first housing 101 is provided with the mounting member 108 and the second elastic member 402 is provided between the mounting member 108 and the ejecting member 401, after the snap 301 and the groove 104 are disengaged, the ejecting member 401 extends out of the first housing 101 under the effect of the second elastic member 402, so that the snap 301 and the groove 104 are separated from each other, and thus the first housing 101 and the second housing102 are reliably disconnected from snap-fitting. When the snap 301 and the groove 104 are engaged in a snap-fit manner, the ejecting member 401 retracts into the first housing 101 under the effect of the purifying component 200 mounted on the second housing 102 and compresses the second elastic member 402. Thus, there is no interfering with the connection between the first housing 101 and the second housing 102, allowing the first housing 101 and the second housing 102 to be reliably connected. With the presence of the second elastic member 402 and the mounting member 108, the ejecting member 401 can extend out of and retract into the first housing 101 and the structure is simple and reliable.

In reference to Fig. 5b, the ejecting member 401 comprises a base plate 403 and a first ejecting rod 404 provided on one side of the base plate 403 and capable of extending out of and retracting into the first housing 101, The second elastic member 402 is provided between the base plate 303 and the mounting member 108. When the first housing 101 and the second housing 102 are disconnected, the second elastic member 402 is restored from its deformation and pushes the base plate 403 to abut against the first housing 101, the first ejecting rod 404 is pushed to extend out of the first housing 101. When the first housing 101 and the second housing 102 are connected, the second elastic member 402 is compressed, the base plate 403 no longer abuts against the first housing 101 and the first ejecting rod 404 retracts into the first housing 101.

In the air purifier of this embodiment of the invention, the second elastic member 402 is provided between the base plate 403 and the mounting member 108, so that when the first housing 101 and the second housing 102 are connected, the first ejecting rod 404 can retract into the first housing 101 by compressing the second elastic member 402, without interfering with the connection between the first housing 101 and the second housing 102. When the first housing 101 and the second housing 102 are disconnected, the first ejecting rod 404 can extend out of the first housing 101 under the effect of the second elastic member 402 so that the snap 301 and the groove 104 are separated form each other and the first housing 101 and the second housing 102 are reliably disconnected.

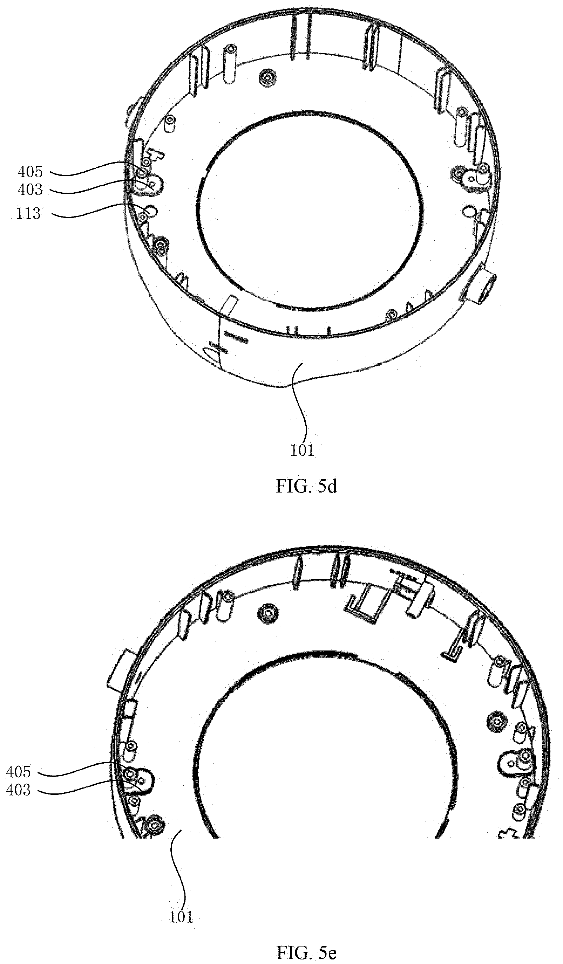

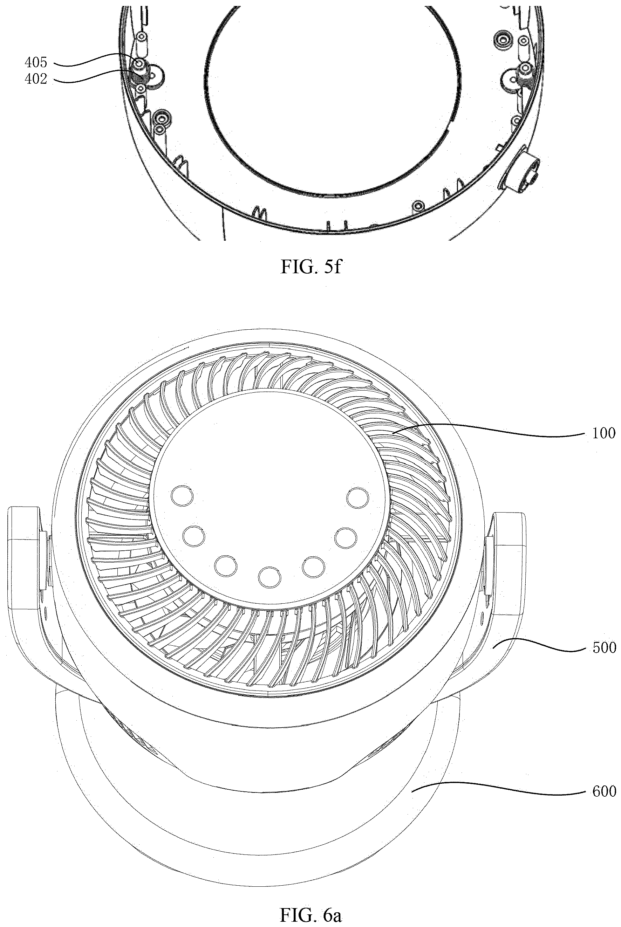

In reference to Figs. 5c, 5d, 5e, and 5f, in some modes of realization, the ejecting member 401 further comprises a second ejecting rod 405 provided on the other side of the base plate 403, and a bypass hole 109 is provided on the mounting member 108. When the first ejecting rod 404 retracts into the first housing 101, the second ejecting rod 405 extends into the bypass hole 109. The first ejecting rod 404 can be a cylindrical rod. The second ejecting 405 can be a cylindrical rod. The axis of the first ejecting rod 404 can be parallel to the axis of the second ejecting rod 405.

In the air purifier of this embodiment of the invention, when the first ejecting rod 404 of the ejecting member 401 retracts into the first housing 101, the second ejecting rod 405 of the ejecting member 401 extends into the bypass hole 109 on the mounting member 108, so that the ejecting member 401 can reliably retract into the first housing 101 when the snap 301 and the groove 104 engage in a snap-fit manner, and thus the first housing 101 and the second housing 102 can be reliably connected with each other.

The first housing 101 is provided with a plurality of ejecting parts 400, ejecting members 401 of the plurality of ejecting parts being capable of extending out of and retracting into the first housing 101. In the example of Fig. 5a, the first housing 101 is provided with two ejecting parts 400, which can be evenly or substantially evenly distributed on the first housing 101.

In the air purifier of this embodiment of the invention, the first housing 101 is provided with the plurality of ejecting parts 400, after the snap 301 and the groove 104 disengage, the first housing 101 and the second housing 102 can move away from each other, and thus the snap 301 and the groove 104 can be separated from each other, and the first housing 101 and the second housing 102 can be reliably disconnected.

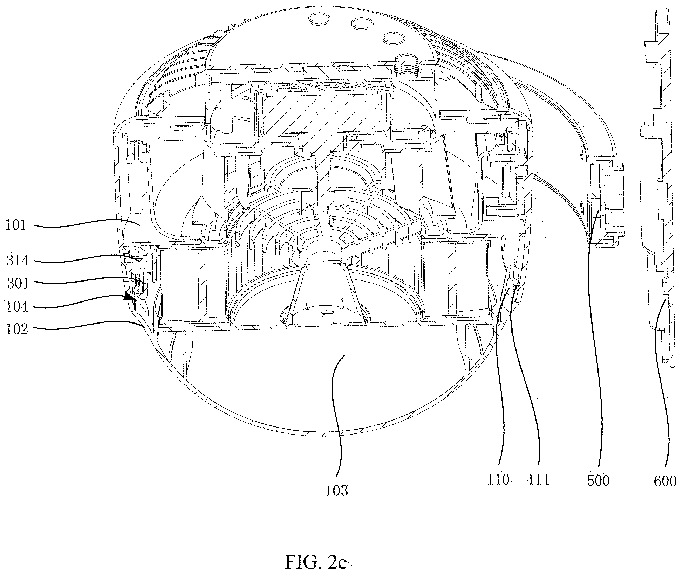

In reference to Fig. 2c, one of the first housing 101 and the second housing 102 is further provided with a first snap-fit portion and the other of the first housing 101 and the second housing 102 is further provided with a second snap-fit portion, the first snap-fit portion and the second snap-fit portion being connected in a snap-fit manner. A side wall of the first housing 101 is provided a protrusion 111 protruding towards the inside of the first housing 101 and forming the first snap-fit portion. A side wall of the second housing 102 is provided with a hook 110 forming the second snap-fit portion. The hook 110 is hooked on the protrusion 111.

In the air purifier of this embodiment of the invention, the first housing 101 and the second housing 102 are further connected in a snap-fit manner by means of the first snap-fit portion and the second snap-fit portion, snap-fit connection is established at two locations between the first housing 101 and the second housing 102. Thus, the first housing 101 and the second housing 102 are reliably connected, and with one of the snap-fit locations consisting of the snap 301 and the groove 104, it is convenient and fast to establish the snap-fit connection and disengage it.

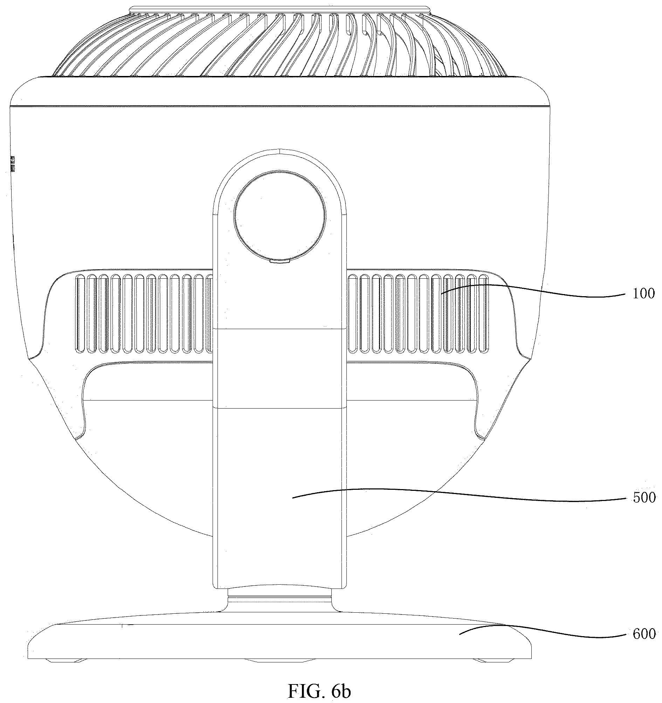

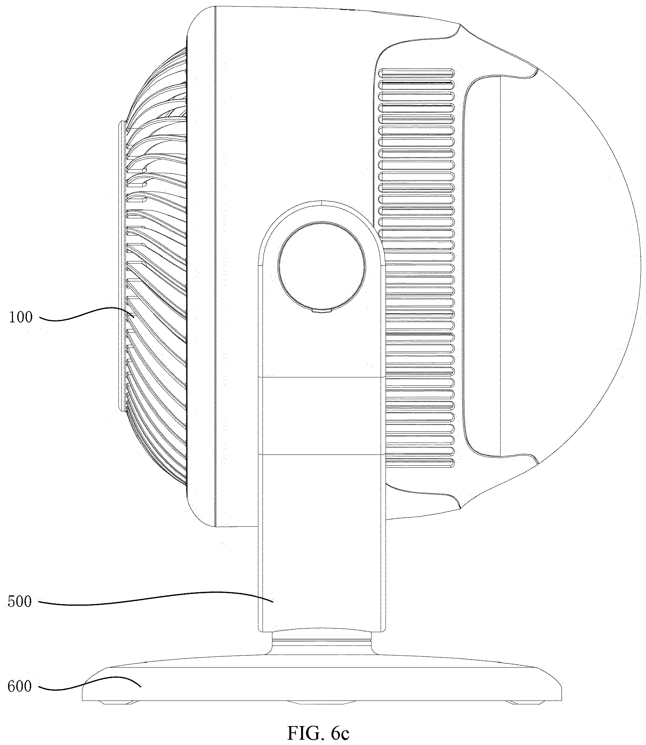

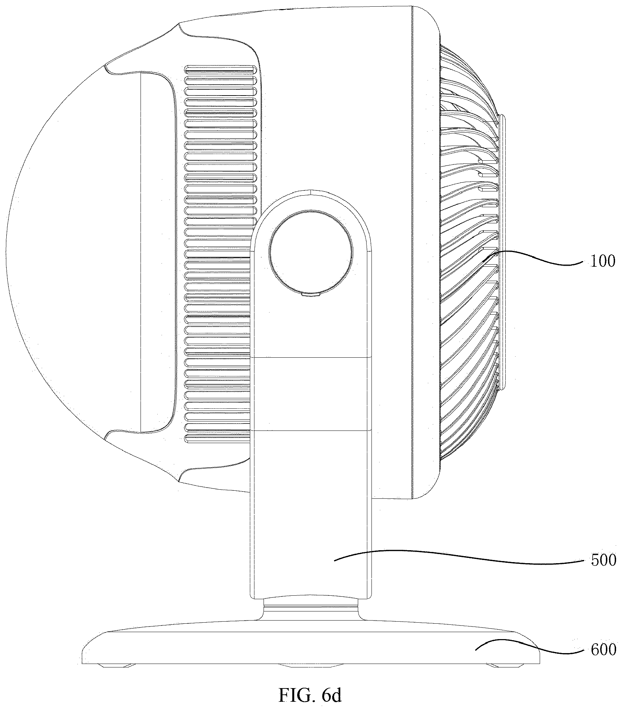

In reference to Figs. 6a to 6d, the air purifier of the present embodiment of the invention further comprises a support 500 and a seat 600. The support 500 is in the shape of a semi-circle. Two ends of the support 500 are both provided with an shaft hole. The outside of the housing 100 is provided with two rotary shafts opposite to each other, each of which is correspondingly mounted in one of the shaft holes so that the housing 100 is rotatably suspended on the support 500 while the bottom of the support 500 is fixed to the seat 600, facilitating the placement of the air purifier.

In the air purifier of this embodiment of the invention, when replacing the filter, the operating member 106 mounted on the first housing 101 is first pressed. The operating member 106 pushes the operating pin 314 to move so that the base 303 connected with the operating pin 314 compresses the first elastic member 309 and the tongue 304 connected with the base 303 moves away from the groove 104 on the second housing 104. Thus, the tongue 304 and the groove 104 are disconnected and the first housing 101 and the second housing 102 are also disconnected. At the same time, the first ejecting rod 404 of the ejecting member 401 extends out of the first housing 101 to abut against and push the purifying component 200 mounted on the second housing 102 so that the first housing 101 and the second housing 102 move away from each other and thus the snap 301 provided on the first housing 101 and the groove 104 provided on the second housing 102 are separated from each other. Therefore, when the operating member 106 is no longer pressed, the snap 301 moves towards the groove 104 under the elastic effect of the first elastic member 309, but will not engage in a snap-fit manner with the groove 104. When the snap 301 and the groove 104 disengage, as the hook 110 is hooked on the protrusion 111, the first housing 101 and the second housing 102 can be disconnected by directly removing the first housing 101, then the filter can be replaced.

After having replaced the filter, the hook 110 is first abutted against the protrusion 111, and then the first housing 101 is pressed from top to bottom. The snap 301 on the first housing 101 will then move away from the groove 104 under the effect of the side wall of the second housing 102. When a top face of the first housing 101 abuts against a top face of the second housing 102, the snap 301 will then automatically engage with the groove 104 in a snap-fit manner under the effect of the first elastic member 309.

With the air purifier of this embodiment of the invention, when replacing the purifying component 200, one only needs to press once the operating member 106 in order to remove the first housing from the second housing 102. After having replaced the filter, one only needs to press once the first housing 101 from top to bottom in order to connect the first housing 101 and the second housing 102. The process of replacing the filter is simple and convenient. The various embodiments or modes of realization are described progressively in the specification. The description of each embodiment focuses on its differences with other embodiments. The same or similar parts of the various embodiments can be referred to each other.

In addition, the specific characteristics, structures, materials, or features described can be appropriately combined in any one or more modes of realization or examples as long as within the scope of the claims.

Finally, it should be noted that: the various embodiments above are used merely to describe the technical solutions of the present invention, not to limit it, its scope being defined by the claims.

## Claims

1. An air purifier, comprising:
- a housing (100), comprising a first housing (101) and a second housing (102) detachably connected with each other and enclosing an accommodating cavity (103) when connected;
- a purifying component (200), accommodated in the accommodating cavity (103); and
- a locking component (300), comprising a mounting box (302) fixed on the first housing (101) and a snap (301) partially arranged in the mounting box (302) and movable between an engaged position, where it engages with a groove (104) provided on the second housing (102), and a disengaged position, where it disengages with the groove (104);
the first housing (101) and the second housing (102) being disconnected when the snap (301) moves to the disengaged position, and connected when the snap (301) moves to the engaged position and engages with the groove (104) in a snap-fit manner,
**characterized in that** the first housing (101) is further provided with an ejecting part (400) comprising an extendable ejecting member (401), when the snap (301) disengages with the groove (104), the ejecting member (401) extends out of the first housing (101) and abuts against the purifying component (200) mounted on the second housing (102) so that the second housing (102) and the first housing (101) move away from each other, when the snap (301) and the groove (104) are connected in a snap-fit manner, the ejecting member (401) retracts back into the first housing (101).

2. The air purifier according to claim 1, **characterized in that**, the snap (301) comprises a base (303) movably arranged in the mounting box (302) and a tongue (304) connected with the base (303) and extending outside the mounting box (302) to engage with the groove (104) in a snap-fit manner at the engaged position.

3. The air purifier according to claim 1 or 2, **characterized in that**, the locking component (300) further comprises a first elastic member (309) provided in the mounting box (302); when the snap (301) moves away from the groove (104), the snap (301) drives the first elastic member (309) to move to a compressed position, and when the snap (301) moves towards the groove (104), the first elastic member (309) elastically returns to an initial position.

4. The air purifier according to claim 3, **characterized in that**, the base (303) is provided with a mounting cavity (312) that opens towards a direction opposite to the groove (104), a part of the first elastic member (309) is received in the mounting cavity (312).

5. The air purifier according to any one of claims 1 to 4, **characterized in that**, the mounting box (302) is further provided with a guiding hole (310) and the snap (301) is further provided with a guiding pin (311) protruding towards and inserted in the guiding hole (310).

6. The air purifier according to claim 5, **characterized in that**, the guiding pin (311) is barrel shaped with its open end located opposite to the guiding hole (310), a bottom wall and a side wall of the barrel of the guiding pin (311) enclosing the mounting cavity (312).

7. The air purifier according to any one of claims 1 to 6, **characterized in that**, the mounting box (302) is fixed on an inner side of the first housing (101) and is further provided with an operating hole (313) and the snap (301) is further provided with an operating pin (314) inserted in the operating hole (313).

8. The air purifier according to claim 7, **characterized in that**, the first housing (101) is further provided with a mounting hole (105) in which an operating member (106) is inserted, one end of the operating member (106) abutting against one end of the operating pin (314), another end of the operating member (106) is flush with an outer surface of the first housing (101) and is accessible from the outside of the first housing (101).

9. The air purifier according to claim 8, **characterized in that**, the first housing (101) is further provided with at least one set of guiding members (107) located on the outer periphery of the mounting hole (105), each set of guiding members (107) comprising two guiding sub-members (114);
guiding ribs (112) are provided on the outer peripheral surface of the operating member (106) and are movable between two guiding sub-members (114) of one set of guiding members (107).

10. The air purifier according to any one of claims 1 to 9, **characterized in that**, the ejecting part (400) further comprises a mounting member (108) fixed on the first housing (101) and a second elastic member (402) provided between the mounting member (108) and the ejecting member (401).

11. The air purifier according to claim 10, **characterized in that**, the ejecting member (401) comprises a base plate (403) and a first ejecting rod (404) provided on one side of the base plate (403) and capable of extending out of the first housing (101), the second elastic member (402) being provided between the base plate (403) and the mounting member (108).

12. The air purifier according to claim 11, **characterized in that**, the ejecting member (401) further comprises a second ejecting rod (405) provided on the other side of the base plate (403), a bypass hole (109) being provided on the mounting member (108); when the first ejecting rod (404) retracts into the first housing (101), the second ejecting rod (405) extends into the bypass hole (109).

13. The air purifier according to any one of claims 1 to 12, **characterized in that**, the first housing (101) is provided with a plurality of ejecting parts (400), the ejecting members (401) of the plurality of ejecting parts being capable of extending out of and retracting into the first housing (101).

14. The air purifier according to any one of claims 1 to 13, **characterized in that**, one of the first housing (101) and the second housing (102) is further provided with a first snap-fit portion and the other of the first housing (101) and the second housing (102) is further provided with a second snap-fit portion, the first snap-fit portion and the second snap-fit portion being connected in a snap-fit manner when the first housing (101) is connected with the second housing (102).

## Patentansprüche

1. Luftreiniger, Folgendes umfassend:
- ein Gehäuse (100), das ein erstes Gehäuse (101) und ein zweites Gehäuse (102) umfasst, die lösbar miteinander verbunden sind und im verbundenen Zustand einen Aufnahmehohlraum (103) umschließen;
- eine in dem Aufnahmehohlraum (103) aufgenommene Reinigungskomponente (200); und
- eine Verriegelungskomponente (300), die ein an dem ersten Gehäuse (101) befestigtes Befestigungselement (302) und einen teilweise in dem Befestigungselement (302) angeordneten Schnappverschluss (301) umfasst, der zwischen einer Eingriffsstellung, in der er in eine an dem zweiten Gehäuse (102) vorgesehene Nut (104) eingreift, und einer gelösten Stellung, in der er von der Nut (104) gelöst ist, beweglich ist;
wobei das erste Gehäuse (101) und das zweite Gehäuse (102) voneinander getrennt werden, wenn sich der Schnappverschluss (301) in die gelöste Stellung bewegt, und miteinander verbunden werden, wenn sich der Schnappverschluss (301) in die Eingriffsstellung bewegt und mit einer Schnapppassung in die Nut (104) eingreift.
**dadurch gekennzeichnet, dass** das erste Gehäuse (101) ferner mit einem Ausstoßteil (400) versehen ist, das ein ausfahrbares Ausstoßelement (401) umfasst, wenn sich der Schnappverschluss (301) von der Nut (104) löst, das Ausstoßelement (401) aus dem ersten Gehäuse (101) herausfährt und mit der Reinigungskomponente (200), die an dem zweiten Gehäuse (102) angebracht ist, in Anschlag kommt, so dass sich das zweite Gehäuse (102) und das erste Gehäuse (101) voneinander weg bewegen, wenn der Schnappverschluss (301) und die Nut (104) mit einer Schnapppassung verbunden werden, das Ausstoßelement (401) sich in das erste Gehäuse (101) zurückzieht.

2. Luftreiniger nach Anspruch 1, **dadurch gekennzeichnet, dass** der Schnappverschluss (301) eine Basis (303), die beweglich in dem Befestigungselement (302) angeordnet ist, und ein Zungenelement (304) umfasst, das mit der Basis (303) verbunden ist und sich außerhalb des Befestigungselements (302) erstreckt, um in der Eingriffsstellung mit einer Schnapppassung in die Nut (104) einzugreifen.

3. Luftreiniger nach Anspruch 1 oder 2, **dadurch gekennzeichnet, dass** die Verriegelungskomponente (300) ferner ein erstes elastisches Element (309) umfasst, das in dem Befestigungselement (302) vorgesehen ist; wenn sich der Schnappverschluss (301) von der Nut (104) wegbewegt, der Schnappverschluss (301) bewirkt, dass das erste elastische Element (309) sich in eine komprimierte Stellung bewegt, und wenn sich der Schnappverschluss (301) auf die Nut (104) zubewegt, das erste elastische Element (309) elastisch in eine Ausgangsstellung zurückkehrt.

4. Luftreiniger nach Anspruch 3, **dadurch gekennzeichnet, dass** die Basis (303) mit einem Befestigungshohlraum (312) versehen ist, der sich in eine zu der Nut (104) entgegengesetzte Richtung öffnet, wobei ein Teil des ersten elastischen Elements (309) in dem Befestigungshohlraum (312) aufgenommen ist.

5. Luftreiniger nach einem der Ansprüche 1 bis 4, **dadurch gekennzeichnet, dass** das Befestigungselement (302) ferner mit einem Führungsloch (310) versehen ist und der Schnappverschluss (301) ferner mit einem Führungsstift (311) versehen ist, der in Richtung des Führungslochs (310) vorsteht und in dieses eingeführt ist.

6. Luftreiniger nach Anspruch 5, **dadurch gekennzeichnet, dass** der Führungsstift (311) hohlzylindrisch ist, wobei sich sein offenes Ende gegenüber dem Führungsloch (310) befindet und eine Bodenwand und eine Seitenwand des Hohlzylinders des Führungsstifts (311) den Befestigungshohlraum (312) umschließen.

7. Luftreiniger nach einem der Ansprüche 1 bis 6, **dadurch gekennzeichnet, dass** das Befestigungselement (302) an einer Innenseite des ersten Gehäuses (101) befestigt ist und ferner mit einem Betätigungsloch (313) versehen ist und der Schnappverschluss (301) ferner mit einem Betätigungsstift (314) versehen ist, der in das Betätigungsloch (313) eingeführt ist.

8. Luftreiniger nach Anspruch 7, **dadurch gekennzeichnet, dass** das erste Gehäuse (101) ferner mit einem Befestigungsloch (105) versehen ist, in das ein Betätigungselement (106) eingeführt ist, wobei ein Ende des Betätigungselements (106) mit einem Ende des Betätigungsstifts (314) in Anschlag ist und ein anderes Ende des Betätigungselements (106) mit einer Außenfläche des ersten Gehäuses (101) bündig abschließt und von der Außenseite des ersten Gehäuses (101) zugänglich ist.

9. Luftreiniger nach Anspruch 8, **dadurch gekennzeichnet, dass** das erste Gehäuse (101) ferner mit mindestens einem Satz von Führungselementen (107) versehen ist, die am Außenumfang des Befestigungslochs (105) angeordnet sind, wobei jeder Satz von Führungselementen (107) zwei Führungsunterelemente (114) umfasst;
Führungsstege (112) an der Oberfläche des Außenumfangs des Betätigungselements (106) vorgesehen sind und zwischen zwei Führungsunterelementen (114) eines Satzes von Führungselementen (107) beweglich sind.

10. Luftreiniger nach einem der Ansprüche 1 bis 9, **dadurch gekennzeichnet, dass** das Ausstoßteil (400) ferner ein am ersten Gehäuse (101) befestigtes Befestigungselement (108) und ein zweites elastisches Element (402) umfasst, das zwischen dem Befestigungselement (108) und dem Ausstoßelement (401) vorgesehen ist.

11. Luftreiniger nach Anspruch 10, **dadurch gekennzeichnet, dass** das Ausstoßelement (401) eine Grundplatte (403) und eine erste Ausstoßstange (404) umfasst, die auf einer Seite der Grundplatte (403) vorgesehen ist und in der Lage ist, aus dem ersten Gehäuse (101) herauszuragen, wobei das zweite elastische Element (402) zwischen der Grundplatte (403) und dem Befestigungselement (108) vorgesehen ist.

12. Luftreiniger nach Anspruch 11, **dadurch gekennzeichnet, dass** das Ausstoßelement (401) ferner eine zweite Ausstoßstange (405) umfasst, die auf der anderen Seite der Grundplatte (403) vorgesehen ist, wobei ein Umgehungsloch (109) an dem Befestigungselement (108) vorgesehen ist; wenn sich die erste Ausstoßstange (404) in das erste Gehäuse (101) zurückzieht, sich die zweite Ausstoßstange (405) in das Umgehungsloch (109) erstreckt.

13. Luftreiniger nach einem der Ansprüche 1 bis 12, **dadurch gekennzeichnet, dass** das erste Gehäuse (101) mit einer Vielzahl von Ausstoßteilen (400) versehen ist, wobei die Ausstoßelemente (401) der Vielzahl von Ausstoßteilen in der Lage sind, aus dem ersten Gehäuse (101) herauszufahren und sich in dieses zurückzuziehen.

14. Luftreiniger nach einem der Ansprüche 1 bis 13, **dadurch gekennzeichnet, dass** eines von dem ersten Gehäuse (101) und dem zweiten Gehäuse (102) ferner mit einem ersten Schnapppassungsteilstück versehen ist und das andere aus dem ersten Gehäuse (101) und dem zweiten Gehäuse (102) ferner mit einem zweiten Schnapppassungsteilstück versehen ist, wobei das erste Schnapppassungsteilstück und das zweite Schnapppassungsteilstück mit einer Schnappassung verbunden sind, wenn das erste Gehäuse (101) mit dem zweiten Gehäuse (102) verbunden ist.

## Revendications

1. Un purificateur d'air, comprenant :
- un boîtier (100), comprenant un premier boîtier (101) et un deuxième boîtier (102) reliés de manière amovible l'un à l'autre et renfermant une cavité de réception (103) lorsqu'ils sont connectés ;
- un composant de purification (200), logé dans la cavité de réception (103) ; et
- un composant de verrouillage (300), comprenant une boîte de montage (302) fixée sur le premier boîtier (101) et un organe d'encliquetage (301) partiellement disposé dans la boîte de montage (302) et mobile entre une position d'engagement, dans laquelle il est en engagement avec une rainure (104) aménagée sur le deuxième boîtier (102), et une position de désengagement, dans laquelle il est désengagé de la rainure (104) ;
le premier boîtier (101) et le deuxième boîtier (102) étant déconnectés lorsque l'organe d'encliquetage (301) se déplace vers la position de désengagement, et connectés lorsque l'organe d'encliquetage (301) se déplace vers la position d'engagement et vient en engagement avec la rainure (104) par encliquetage,
**caractérisé en ce que** le premier boîtier (101) est en outre pourvu d'une partie d'éjection (400) comprenant un élément d'éjection extensible (401), lorsque l'organe d'encliquetage (301) se désengage d'avec la rainure (104), l'élément d'éjection (401) s'étend du premier boîtier (101) et vient en butée contre le composant de purification (200) monté sur le deuxième boîtier (102), de sorte que le deuxième boîtier (102) et le premier boîtier (101) s'éloignent l'un de l'autre, lorsque l'organe d'encliquetage (301) et la rainure (104) sont reliées par encliquetage, l'élément d'éjection (401) se rétractant, revenant dans le premier boîtier (101).

2. Le purificateur d'air selon la revendication 1, **caractérisé en ce que** l'organe d'encliquetage (301) comprend une base (303) disposée de manière mobile dans la boîte de montage (302) et une languette (304) reliée à la base (303) et s'étendant à l'extérieur de la boîte de montage (302) de façon à s'engager dans la rainure (104) par encliquetage dans la position d'engagement.

3. Le purificateur d'air selon la revendication 1 ou la revendication 2, **caractérisé en ce que** le composant de verrouillage (300) comprend en outre un premier élément élastique (309) prévu dans la boîte de montage (302) ; lorsque l'organe d'encliquetage (301) s'éloigne de la rainure (104), l'organe d'encliquetage (301) entraîne le premier élément élastique (309) à se déplacer vers une position comprimée, et lorsque l'organe d'encliquetage (301) se déplace vers la rainure (104), le premier élément élastique (309) revient élastiquement à une position initiale.

4. Le purificateur d'air selon la revendication 3, **caractérisé en ce que** la base (303) est munie d'une cavité de montage (312) qui s'ouvre vers une direction opposée à la rainure (104), une partie du premier élément élastique (309) est reçu dans la cavité de montage (312).

5. Le purificateur d'air selon l'une quelconque des revendications 1 à 4, **caractérisé en ce que** la boîte de montage (302) est en outre pourvu d'un trou de guidage (310) et l'organe d'encliquetage (301) est en outre pourvu d'une broche de guidage (311) faisant saillie vers le trou de guidage (310) et étant insérée dans celui-ci.

6. Le purificateur d'air selon la revendication 5, **caractérisé en ce que** la broche de guidage (311) est en forme de fût avec son extrémité ouverte située à l'opposé du trou de guidage (310), une paroi inférieure et une paroi latérale du cylindre de la broche de guidage (311) entourant la cavité de montage (312).

7. Le purificateur d'air selon l'une quelconque des revendications 1 à 6, **caractérisé en ce que** la boîte de montage (302) est fixé sur un côté intérieur du premier boîtier (101) et est en outre pourvu d'un trou de commande (313) et l'organe d'encliquetage (301) est en outre pourvu d'une broche de commande (314) insérée dans le trou de commande (313).

8. Le purificateur d'air selon la revendication 7, **caractérisé en ce que** le premier boîtier (101) est en outre pourvu d'un trou de montage (105) dans lequel un élément de commande (106) est inséré, une extrémité de l'élément de commande (106) venant en butée contre une extrémité de la broche de commande (314), une autre extrémité de l'élément de commande (106) affleure une surface extérieure du premier boîtier (101) et est accessible depuis l'extérieur du premier boîtier (101).

9. Le purificateur d'air selon la revendication 8, **caractérisé en ce que** le premier boîtier (101) est en outre pourvu d'au moins un ensemble d'éléments de guidage (107) situés sur la périphérie externe du trou de montage (105), chaque ensemble d'éléments de guidage (107) comprenant deux sous-éléments de guidage (114) ;
des nervures de guidage (112) sont prévues sur la surface périphérique externe de l'élément de fonctionnement (106) et sont mobiles entre deux sous-éléments de guidage (114) d'un ensemble d'éléments de guidage (107).

10. Le purificateur d'air selon l'une quelconque des revendications 1 à 9, **caractérisé en ce que** la pièce d'éjection (400) comprend en outre un élément de montage (108) fixé sur le premier boîtier (101) et un deuxième élément élastique (402) prévu entre l'élément de montage (108) et l'élément d'éjection (401).

11. Le purificateur d'air selon la revendication 10, **caractérisé en ce que** l'élément d'éjection (401) comprend une plaque de base (403) et une première tige d'éjection (404) prévue sur un côté de la plaque de base (403) et apte à s'étendre hors du premier boîtier (101), le deuxième élément élastique (402) étant disposé entre la plaque de base (403) et l'élément de montage (108).

12. Le purificateur d'air selon la revendication 11, **caractérisé en ce que** l'élément d'éjection (401) comprend en outre une deuxième tige d'éjection (405) prévue de l'autre côté de la plaque de base (403), un trou de dérivation (109) étant aménagé sur l'élément de montage (108) ; lorsque la première tige d'éjection (404) se rétracte dans le premier boîtier (101), la deuxième tige d'éjection (405) s'étend dans le trou de dérivation (109).

13. Le purificateur d'air selon l'une quelconque des revendications 1 à 12, **caractérisé en ce que** le premier boîtier (101) est pourvu d'une pluralité de pièces d'éjection (400), les éléments d'éjection (401) de la pluralité de pièces d'éjection étant aptes à s'étendre hors du premier boîtier (101) et à se rétracter dans celui-ci.

14. Le purificateur d'air selon l'une quelconque des revendications 1 à 13, **caractérisé en ce que** l'un parmi le premier boîtier (101) et le deuxième boîtier (102) est en outre pourvu d'une première partie encliquetable et l'autre parmi le premier boîtier (101) et le deuxième boîtier (102) est en outre pourvu d'une deuxième partie encliquetable, la première partie encliquetable et la deuxième partie encliquetable étant reliées par encliquetage lorsque le premier boîtier (101) est relié au deuxième boîtier (102).
